# EUROPÄISCHE PATENTSCHRIFT

(11) **EP 1 595 739 B1**
(45) Veröffentlichungstag und Bekanntmachung des Hinweises auf die Patenterteilung: **15.08.2007**
(21) Anmeldenummer: 04405296.7
(22) Anmeldetag: 10.05.2004
(51) Int. Cl.: B60Q 1/06

(54) **Verschwenkvorrichtung**
Tilting device
Dispositif de pivotement

(43) Veröffentlichungstag der Anmeldung: 16.11.2005
(73) Patentinhaber: SAIA-Burgess Murten AG, 3280 Murten (CH)
(72) Erfinder: Bourqui, Yvan, 1720 Corminboeuf (CH)
(74) Vertreter: AMMANN PATENTANWÄLTE AG BERN

(56) Entgegenhaltungen:
- EP-A- 0 064 885
- EP-A- 0 110 158
- EP-A- 0 640 510
- EP-A- 0 852 190
- EP-A- 1 234 716
- DE-A- 2 743 745
- DE-A- 10 206 037
- FR-A- 2 598 127
- FR-A- 2 836 875

## Beschreibung

Die vorliegende Erfindung bezieht sich auf eine Verschwenkvorrichtung mit einem Linearantrieb zum Verschwenken einer Einstellkomponente eines Fahrzeugscheinwerfers.

Derartige Verschwenkvorrichtungen werden eingesetzt, um eine rotierbare Einstellkomponente drehen zu können, und werden beispielsweise im Automobilbereich verwendet, um einen Scheinwerfer als Einstellkomponente gesteuert zu verschwenken und so das Lichtbündel gezielt auszurichten.

Der Linearantrieb derartiger Verschwenkvorrichtungen umfasst eine starre Verstellachse, die geradlinig verschiebbar ist. Um diese lineare Bewegung in eine rotative Bewegung der Einstellkomponente umsetzen zu können, muss der Linearantrieb in geeigneter Weise mit der Einstellkomponente verbunden sein.

Es ist bekannt, den Linearantrieb mittels Kugelgelenken und starren Achsen mit der Einstellkomponente zu verbinden (vgl. z.B. die Patentschrift FR-A-2 760 069). Dies hat u.a. folgende Nachteile (vgl. dazu auch die nachfolgende Erläuterung zu Fig. 1):
- Beim Verschwenken wirken auf den Linearantrieb auch Kräfte quer zur Verstellachse, die, insbesondere bei grossen Verschwenkwinkeln, den Linearantrieb wesentlichen mechanischen Beanspruchungen aussetzen und so seine Lebensdauer reduzieren. Besonders bei Verschwenkvorrichtungen mit herkömmlichem Linearantrieb, der nicht dazu ausgelegt ist, relativ gross Querkräfte aufzunehmen, kann seine Lebensdauer erheblich vermindert sein.
- Die Verwendung von herkömmlichen Kugelgelenken führt in der Regel zu einem gewissen Spiel in der Lagerung, sodass die Einstellkomponente nicht präzise verschwenkbar ist. Verschwenkvorrichtungen mit Lagerspiel sind jedoch insbesondere für Fahrzeugscheinwerfer ungeeignet, da während der Fahrt das ausgesendete Lichtbündel andauernd wackelt. Dies vermag den Fahrer so zu irritieren, dass eine sichere Lenkung des Fahrzeugs nicht mehr gewährleistet ist. Spezielle Kugelgelenke, die eine möglichst spielfreie Lagerung ermöglichen, haben den Nachteil, dass sie relativ teuer sind.

Aus der DE 102 66 037 A1 ist es bekannt, eine Verstellachse mit einem elastisch verformbaren Bereich zu verwenden. Zur Bildung dieses Bereichs wird die Verstellachse speziell bearbeitet oder es wird ein speziell geeignetes Material verwendet, was zu einer relativ teuren Herstellung führt.

Aus der EP 852 190 A1 ist eine Verschwenkvorrichtung mit einem Gelenkstück bekannt, welches zur Bildung einer elastischen Verbindung zwei zueinander parallel verlaufende Verbindungssteg aufweist. Das Gelenkstück ist relativ kompliziert im Aufbau auf.

Aus der EP 110 158 A1 ist eine Vorrichtung mit Einstellschrauben bekannt, welche jeweils mittels einer Lasche mit dem Reflektor verbindbar sind. Die Vorrichtung dient zum manuellen Einstellen des Reflektors und weist keinen Linearantrieb auf.

Ausgehend von diesem Stand der Technik liegt eine Aufgabe der vorliegenden Erfindung darin, eine möglichst einfache und kostengünstige Verschwenkvorrichtung zu schaffen, mittels welcher die lineare Bewegung des Linearantriebs in eine rotative Bewegung umsetzbar ist.

Eine Vorrichtung, die diese Aufgabe löst, ist im Anspruch 1 angegeben. Die weiteren Ansprüche geben bevorzugte Ausführungen sowie eine Scheinwerfereinheit an.

Die Erfindung wird im Folgenden anhand von Ausführungsbeispielen unter Bezugnahme auf Figuren erläutert. Es zeigen
- Fig. 1: eine herkömmliche Verschwenkvorrichtung;
- Fig. 2: eine perspektivische Ansicht einer erfindungsgemässen Verschwenkvorrichtung;
- Fig. 3: eine perspektivische Ansicht einer Komponente für die Verschwenkvorrichtung gemäss Fig. 2;
- Fig. 4: ein perspektivische Ansicht des Verbindungsteils der Komponente gemäss Fig. 3; und
- Fig. 5: eine Draufsicht der Verschwenkvorrichtung gemäss Fig. 2 in leicht geänderter Form, wobei u.a. das Gehäuse weggelassen ist.

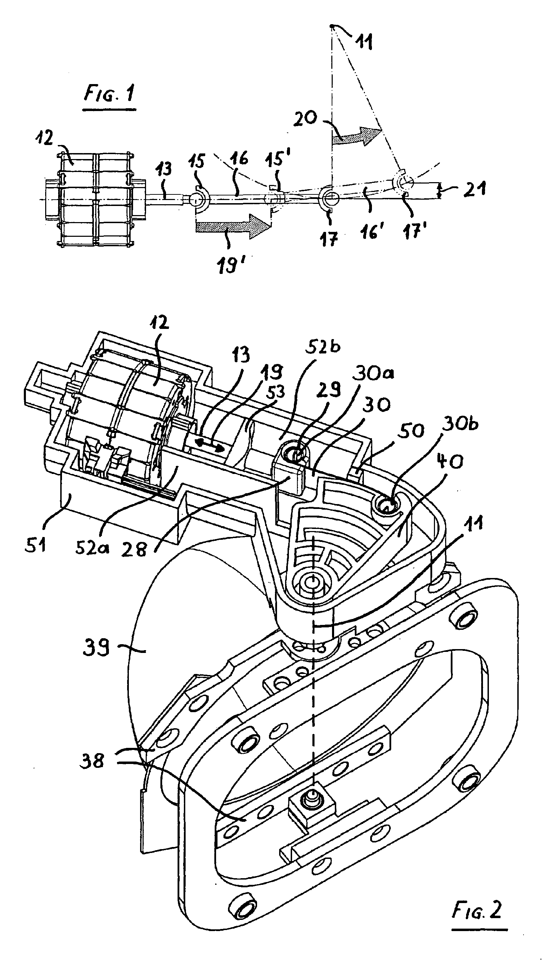

Fig. 1 zeigt den prinzipiellen Aufbau einer herkömmlichen Verschwenkvorrichtung, um eine Einstellkomponente verschwenken zu können, welche um eine Verschwenkachse 11 rotierbar gelagert ist. In Fig. 1 ist die Verschwenkachse 11 senkrecht auf der Blattebene. Die Verschwenkvorrichtung umfasst einen Linearantrieb 12 mit einer linear verschiebbaren Verstellachse 13, welche endseitig mit einem ersten Kugelgelenk 15 versehen ist. Dieses ist mit dem einen Ende einer mechanischen Achse 16 verbunden. Das andere Ende der Achse 16 weist ein zweites Kugelgelenk 17 auf, welches mit der Einstellkomponente verbunden ist.

Wird die Verstellachse 13 in Richtung des Pfeils 19' verschoben, so bewegt sich das zweite Kugelgelenk 17 auf einer kreisförmigen Bahn, wobei die Einstellkomponente in Pfeilrichtung 20 rotiert wird. In Fig. 1 ist die verschobene Position der Komponenten 15, 16 und 17 durch strichpunktierte Linien 15',16' und 17' angedeutet. Die bei der Rotation auftretende Änderung 21 in radialer Richtung, wird durch Verdrehung der Achse 16 in den Kugelgelenken 15 und 17 ausgeglichen. Bei der Verschwenkung wirken auf die Verstellachse 13 Kräfte sowohl in axialer wie radialer Richtung. Radiale Kräfte sind aber möglichst zu vermeiden, da sie den Linearantrieb 12 zusätzlich beanspruchen und zu einem vorzeitigen Verschleiss führen können.

Wie Fig. 2 zeigt, umfasst die erfindungsgemässe Verschwenkvorrichtung einen Linearantrieb 12 und ein mit diesem in Wirkverbindung stehendes biegsames Verbindungsteil 30. Der Linearantrieb 12 enthält eine Verstellachse 13, welche linear verschiebbar ist, wie dies durch den Doppelpfeil 19 angedeutet ist. Als Linearantrieb 12 ist ein Aktuator bekannter Art geeignet, wie er z.B. in der Patentschrift EP-A-1 363 382 beschrieben ist.

Die Verstellachse 13 enthält endseitig eine Halterung 28, an welcher das eine Ende 30a des Verbindungsteils 30 befestigt ist. Das andere Ende 30b des Verbindungsteils 30 ist an einem Führungsteil 40 befestigt, welches um die Verschwenkachse 11 drehbar gelagert ist.

Im Ausführungsbeispiel gemäss Fig. 2 ist weiter ein mit dem Führungsteil 40 fest verbundener Träger 38 vorgesehen, an welchem als Einstellkomponente ein Reflektor 39 eines Scheinwerfers fixiert ist. Führungsteil 40, Träger 38 und Einstellkomponente 39 sind somit gemeinsam um die Verschwenkachse 11 rotierbar. Natürlich braucht der Träger 38 nicht so ausgestaltet zu sein, wie er in Fig. 2 gezeigt ist, sondern ist an die entsprechende Ausgestaltung der zu verschwenkenden Einstellkomponente in geeigneter Weise angepasst.

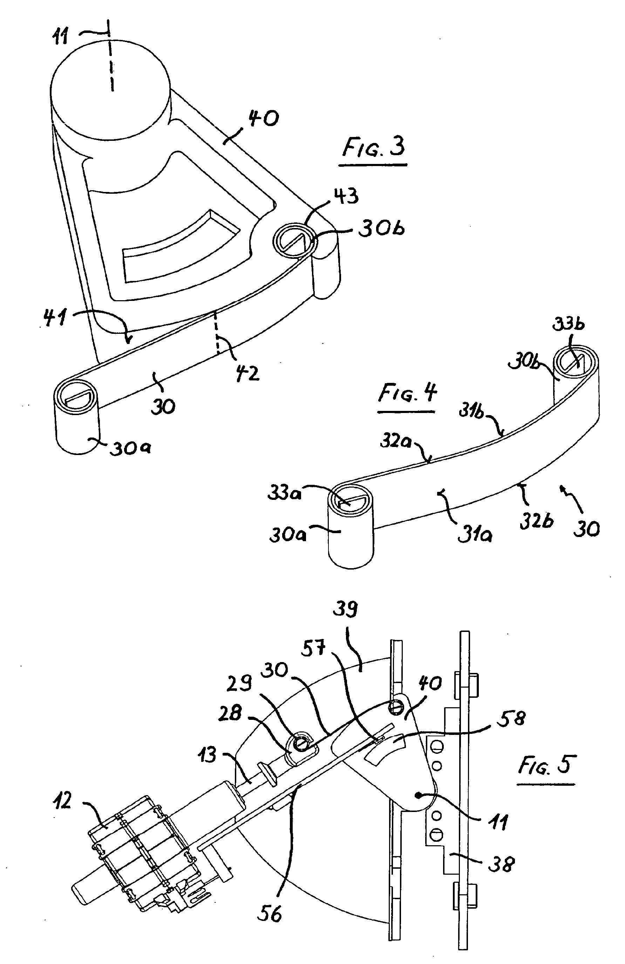

Wie auch Figuren 3 und 4 zeigen, ist das Verbindungsteil 30 im Wesentlichen streifenförmig ausgebildet und weist eine flächige Vorder- und Hinterseite 31a bzw. 31b sowie eine obere und untere Schmalseite 32a bzw. 32b auf. Das Verbindungsteil 30 ist quer zu den Seiten 31a und 31b biegbar, wobei es nach Wegnahme der Belastung wieder seine Ausgangsform annimmt. Es ist demnach elastisch und wirkt wie eine Feder. In Richtung der Schmalseiten 32a und 32b ist das Verbindungsteil 30 im Wesentlichen steif, sodass die Druck- bzw. Zugkräfte, welche die Verstellachse 13 beim Aus- bzw. Einfahren erzeugt, an das Führungsteil 40 übertragen werden. Das Verbindungsteil 30 ist so angeordnet, dass es in radialer Richtung, d.h. um die Verschwenkachse 11 herum elastisch ist, während es in axialer Richtung 19 im Wesentlichen starr ist.

Als Material zur Herstellung des Verbindungsteils 30 ist Metall geeignet, beispielsweise Federbronze oder rostfreier Stahl (INOX).

Wie insbesondere Fig. 3 zeigt, umfasst das rotierbare Führungsteil 40 eine gekrümmte Umlenkfläche 41. Vorzugsweise ist das Führungsteil 40 als Segment mit einer kreisförmig gekrümmten Umlenkfläche 41 ausgebildet, wobei der Mittelpunkt des Kreises auf der Verschwenkachse 11 liegt. Diese Geometrie gewährleistet ein gleichmässiges Verschwenken des Führungsteils 40 und somit der Einstellkomponente 39, d.h. der Verschwenkwinkel, um welchen die Einstellkomponente rotiert wird, ist proportional zum Weg, um welchen die Verstellachse 13 verschoben wird.

Das Verbindungsteil 30 ist vom Ende 30a her im Wesentlichen tangential an die Umlenkfläche 41 geführt und schmiegt sich von der Umlenkstelle bis zum Ende 30b an die Umlenkfläche 41 an. Die Umlenkstelle ist in der Fig. 3 durch die gestrichelte Linie 42 angedeutet. Beim Betätigen des Linearantriebs 12 wird das Ende 30a des Verbindungsteils 30 linear verschoben, sodass sich die Umlenkstelle 42 entsprechend verschiebt und das Verbindungsteil 30 um die Umlenkfläche 42 aufgerollt bzw. von dieser abgerollt wird.

Wie Figuren 3 und 4 weiter zeigen, sind die beiden Enden 30a und 30b des Verbindungsteils 30 gerollt ausgebildet, wobei der letzte Teil 33a bzw. 33b eines jeweiligen Endes 30a bzw. 30b etwas nach innen abgewinkelt ist. Die beiden Enden 30a und 30b sind elastisch und wirken ähnlich wie eine Spiralfeder.

Das Führungsteil 40 umfasst am Ende der Umlenkfläche 41 eine zylinderförmige Ausnehmung 43, deren Innendurchmesser etwas kleiner ist als der Aussendurchmesser des Endes 30b. Wie dies in Fig. 2 angedeutet ist, umfasst analog die Halterung 28 der Verstellachse 13 eine zylinderförmige Ausnehmung 29, deren Innendurchmesser etwas kleiner ist als der Aussendurchmesser des Endes 30a

Zur Montage des Endes 30b am Führungsteil 40 wird der abgewinkelte Teil 33b mit einem Werkzeug gegriffen und im Uhrzeigersinn gedreht, sodass das Ende 30b weiter aufgerollt und sein Aussendurchmesser geringer wird. Das gespannte Ende 30b wird dann in die Ausnehmung 43 des Führungsteils 40 eingefügt und das abgewinkelte Teil 33b losgelassen. Aufgrund der Federkraft versucht das Ende 30b wieder seine Ausgangsform einzunehmen und drückt dabei gegen die Innenwandung der Ausnehmung 43. Das Ende 30b ist so auf einfache Weise fest und insbesondere ohne Spiel mit dem Führungsteil 40 verbunden.

Analog kann das andere gerollte Ende 30a des Verbindungsteils 30 fest bzw. spielfrei an der Verstellachse 13 befestigt werden, indem bei der Montage das gespannte Ende 30a in die Ausnehmung 29 der Halterung 28 eingeführt wird. Nach dem Loslassen des abgewinkelten Teils 33a ist das Ende 30a durch die Federkraft fest in der Ausnehmung 29 gehalten.

Nebst einer spiralförmigen Geometrie sind auch andere Geometrien denkbar, um das Ende 30a bzw. 30b federelastisch auszubilden und es so mittels Federkraft fest mit der Halterung 28 bzw. des Führungsteils 40 verbinden zu können, beispielsweise eine abgewinkelte oder U-förmige Geometrie. Die Ausnehmung 29 bzw. 43 ist dabei in geeigneter Weise an die entsprechende Geometrie des Endes 30a. bzw. 30b angepasst.

Zurückkommend auf Fig. 2, so sind der Linearantrieb 12, das Verbindungsteil 30 sowie das Führungsteil 40 in einem Gehäuse 51 aufgenommen. Das Gehäuse 51 umfasst ein fest angebrachtes Stützelement 50, das beispielsweise quaderförmig ausgebildet ist und das eine Vorderseite aufweist, die für das Verbindungsteil 30 als Anschlag in radialer Richtung dient. Das Stützelement 50 ist so angeordnet, dass es etwa auf der Höhe der Umlenkstelle 42 endet und zwischen Führungsteil 40 und Stützelement 50 ein Spalt gebildet ist, durch welchen hindurch das Verbindungsteil 30 geführt ist. Beim Betätigen des Linearantriebs 12 gleitet das Verbindungsteil 30 dem Stützelement 50 entlang, wobei dieses verhindert, dass der an der Halterung 28 befestigte Teil des Verbindungsteils 30 nach aussen gedrückt wird. Die beim Verschwenken auftretenden radialen Kräfte werden demnach vom Stützelement 50 und nicht von der Verstellachse 13 aufgenommen, wodurch ein schonender Betrieb des Linearantriebs 12 gewährleistet ist. Es ist denkbar weitere Stützelemente vorzusehen, um beim Verschieben des Verbindungsteils 30, den an der Halterung 28 befestigten Teil des Verbindungsteils 30 auf einer möglichst geradlinigen Bahn zu führen.

Die Verstellachse 13 ist zwischen dem Motorengehäuse des Linearantriebs 12 und der Halterung 28 mit einem Stabilisationselement 53 versehen, das die seitliche Stabilisation der Verstellachse 13, d.h. quer zur Verschieberichtung 19, unterstützt. Das Gehäuse 51 weist zwei zueinander beabstandete Seitenwände 52a und 52b auf, zwischen welchen die Verstellachse 13 verschiebbar angeordnet ist und welche als Führungen für das Stabilisationselement 53 dienen.

Fig. 5 zeigt eine Draufsicht der Verschwenkvorrichtung gemäss Fig. 2, wobei zur besseren Übersicht einige Komponenten wie Gehäuse 51 und Stabilisationselement 53 weggelassen sind. Entlang der Verstellachse 13 verläuft eine Leiterplatte 56, die fest am Motorengehäuse des Linearantriebs 12 fixiert ist und die endseitig einen Sensor 57 z.B. in Form eines Hall-Elements aufweist. Am Führungsteil 40 ist gegenüberliegend zum Sensor 57 ein magnetisches kreisförmiges Segment 58 angebracht. Sensor 57 und Magnet 58 sind Teil einer Erfassungseinrichtung, welche insbesondere zum Erfassen der Nullposition der Einstellkomponente 58 dient. Fig. 5 zeigt diese Nullposition, bei welcher sich der Sensor 57 in der Mitte des Magnetes 58 befindet und daher einem symmetrischen Magnetfeld ausgesetzt ist. Wird das Führungsteil 40 in die eine oder andere Richtung verschwenkt, wirkt auf den Sensor 57 jeweils ein asymmetrisches Magnetfeld.

Mittels der Erfassungseinrichtung kann überprüft werden, ob die von der Verschwenkvorrichtung eingestellte Nullposition mit der "wahren" Nullposition übereinstimmt. Tritt eine Abweichung auf, so wird die Nulleinstellung der Verstellachse 13 entsprechend korrigiert, bis der Sensor 57 keine Asymmetrie mehr im Magnetfeld feststellt. Besonders bei verschwenkbaren Scheinwerfereinheiten in Automobilen ist zu gewährleisten, dass dann, wenn das Lichtbündel geradeaus verlaufen soll, die Verschwenkvorrichtung auch tatsächlich die Nullposition findet, um so insbesondere ein Blenden von entgegenkommenden Automobilisten zu verhindern.

Es ist auch denkbar, anhand des Verlaufs der Messkurve des Sensors 57 nebst der Nullposition auch den aktuellen Verschwenkwinkel der Einstellkomponente 39 zu bestimmen.

Aus der oben dargestellten Konzeption der Verschwenkvorrichtung ergeben sich u.a. folgende Vorteile:
- Der Aufbau ist äussert einfach und kostengünstig. Insbesondere sind keine teuren Gelenke, beispielsweise Kugelgelenke, erforderlich.
- Der Linearantrieb wird nicht oder kaum radialen Kräften ausgesetzt. Durch den schonenderen Betrieb ist eine längere Lebensdauer gewährleistet.
- Die beweglichen Teile 13, 30 und 40 sind spielfrei miteinander verbunden, sodass ein präzises Verschwenken der Einstellkomponente möglich ist.

Die Verschwenkvorrichtung eignet sich insbesondere zum gesteuerten Verschwenken von Fahrzeugscheinwerfern, da während der Fahrt das Lichtbündel ruhig bleibt und nicht andauernd wackelt. Die Verschwenkvorrichtung kann aber ganz allgemein zum gesteuerten Verschwenken von rotierbaren Einstellkomponenten verwendet werden. Beispiele von solchen Einstellkomponenten sind: Reflektor eines Fahrzeugscheinwerfers, Blende oder eine andere strahlenbeeinflussende Scheinwerferkomponente, etc.

Zum gesteuerten Verschwenken steht die Verschwenkvorrichtung mit einer geeigneten Steuereinheit und gegebenenfalls Sensoren in Wirkverbindung, sodass die Einstellkomponente z.B. in Abhängigkeit von erfassten Sensordaten verschwenkbar ist.

## Patentansprüche

1. Verschwenkvorrichtung zum Verschwenken einer Einstellkomponente (38, 39) eines Fahrzeugscheinwerfers um eine Verschwenkachse (11), umfassend
einen Linearantrieb (12),
ein Führungsteil (40), welches um die Verschwenkachse rotierbar und mit der Einstellkomponente (38, 39) verbindbar ist, und
ein biegsames Verbindungsteil (30), welches im Wesentlichen streifenförmig ist und mit dem Linearantrieb sowie mit dem Führungsteil verbunden ist, wobei
das Führungsteil eine gekrümmte umlenkfläche (41) umfasst, an die sich das Verbindungsteil von einer sich beim Verschwenken ändernden Umlenkstelle (42) an anschmiegt.

2. Verschwenkvorrichtung nach Anspruch 1, **dadurch gekennzeichnet, dass** das Verbindungsteil (30) quer zur Richtung der Verstellachse (13) des Linearantriebs (12) im Wesentlichen elastisch und in Richtung der Verstellachse im Wesentlichen steif ist.

3. Verschwenkvorrichtung nach einem der Ansprüche 1 bis 2, **dadurch gekennzeichnet, dass** das Verbindungsteil (30) aus Metall ist.

4. Verschwenkvorrichtung nach einem der Ansprüche 1 bis 3, **dadurch gekennzeichnet, dass** der Linearantrieb (12) eine Halterung (28) umfasst, an welcher das Verbindungsteil (30) befestigt ist.

5. Verschwenkvorrichtung nach einem der Ansprüche 1 bis 4, **dadurch gekennzeichnet, dass** das Verbindungsteil (30) elastische Enden (30a, 30b) aufweist zur Fixation mittels Federkraft.

6. Verschwenkvorrichtung nach einem der Ansprüche 1 bis 5, **gekennzeichnet durch** mindestens ein Stützelement (50) zum Stützen des Verbindungsteil (30) quer zur Verstellachse (13) des Linearantriebs (12).

7. Scheinwerfereinheit mit einer strahlenbeeinflussenden Komponente, insbesondere für ein Automobil, **gekennzeichnet durch** eine Verschwenkvorrichtung nach einem der Ansprüche 1 bis 6, wobei das Verbindungsteil (30) der Verschwenkvorrichtung mit der Komponente (39) in Wirkverbindung steht.

## Claims

1. Swivelling device for swivelling an adjusting component (38, 39) of a vehicle headlamp about a swivel axis (11), comprising
a linear actuator (12),
a guide member (40) that is rotatable about the swivel axis and connectable to the adjusting component (38, 39), and
a flexible connecting element (30) that is essentially strip-shaped and connected both to the linear actuator and to the guide member,
the guide member comprising a curved deflection surface (41) to which the connecting element adapts from a deflection point (42) that changes during swivelling.

2. Swivelling device according to claim 1, **characterised in that** the connecting element (30) is essentially elastic transversally to the direction of the adjusting axis (13) of the linear actuator (12) and essentially rigid in the direction of the adjusting axis.

3. Swivelling device according to one of claims 1 to 2, **characterised in that** the connecting element (30) is made of metal.

4. Swivelling device according to one of claims 1 to 3, **characterised in that** the linear actuator (12) comprises a mounting (28) to which the connecting element (30) is fastened.

5. Swivelling device according to one of claims 1 to 4, **characterised in that** the connecting element (30) has elastic ends (30a, 30b) for its fastening by means of spring force.

6. Swivelling device according to one of claims 1 to 5, **characterised by** at least one supporting element (50) for supporting the connecting element (30) transversally to the adjusting axis (13) of the linear actuator (12).

7. Headlamp assembly comprising a beam influencing component, more particularly for an automobile, **characterised by** a swivelling device according to one of claims 1 to 6, the connecting element (30) of the swivelling device being operatively connected to the component (39).

## Revendications

1. Dispositif de pivotement pour pivoter un composant de réglage (38, 39) d'un phare de véhicule autour d'un axe de pivotement (11), comprenant
un actionneur linéaire (12),
un élément de guidage (40) rotatif autour de l'axe de pivotement et connectable au composant de réglage (38, 39), et
un élément de liaison (30) flexible, lequel présente essentiellement la forme d'une bande et est relié à l'actionneur linéaire et à l'élément de guidage,
l'élément de guidage comprenant une surface de déviation (41) incurvée qu'épouse l'élément de liaison à partir d'un point de déviation (42) qui se déplace au cours du pivotement.

2. Dispositif de pivotement selon la revendication 1, **caractérisé en ce que** l'élément de liaison (30) est essentiellement élastique transversalement à la direction de l'axe de réglage (13) de l'actionneur linéaire (12) et essentiellement rigide dans la direction de l'axe de réglage.

3. Dispositif de pivotement selon l'une des revendications 1 à 2, **caractérisé en ce que** l'élément de liaison (30) est en métal.

4. Dispositif de pivotement selon l'une des revendications 1 à 3, **caractérisé en ce que** l'actionneur linéaire (12) comprend une fixation (28) à laquelle est fixé l'élément de liaison (30).

5. Dispositif de pivotement selon l'une des revendications 1 à 4, **caractérisé en ce que** l'élément de liaison (30) présente des extrémités élastiques (30a, 30b) pour sa fixation par force de ressort.

6. Dispositif de pivotement selon l'une des revendications 1 à 5, **caractérisé par** au moins un élément d'appui (50) pour appuyer l'élément de liaison (30) transversalement à l'axe de réglage (13) de l'actionneur linéaire (12).

7. Unité de phare comprenant un composant influençant le rayonnement, plus particulièrement pour une automobile, **caractérisé par** un dispositif de pivotement selon l'une des revendications 1 à 6, l'élément de liaison (30) du dispositif de pivotement étant fonctionnellement relié audit composant (39).
